# EUROPEAN PATENT APPLICATION

(11) **EP 4 261 298 A1**
(43) Date of publication of application: **18.10.2023**
(21) Application number: 21906157.9
(22) Date of filing: 26.10.2021
(51) Int. Cl.: C22B 7/00, C22B 21/00, C22B 23/00, C22B 47/00, C22B 3/06, C22B 3/16, C22B 3/44

(54) **METHOD FOR PROCESSING LITHIUM ION BATTERY WASTE**

(30) Priority: 14.12.2020 JP 2020207008
(71) Applicant: JX Nippon Mining & Metals Corporation, Tokyo 105-8417 (JP)
(72) Inventor: GODA, Tomonari, Tokyo 105-8418 (JP); KAWAMURA, Toshifumi, Tokyo 105-8417 (JP)
(74) Representative: Arnold & Siedsma
(86) International application number: PCT/JP2021/039544
(87) International publication number: WO 2022/130793

(57) **Abstract**

Provided is a method for processing lithium ion battery waste, which can effectively precipitate aluminum ions and iron ions in the solution by neutralization and relatively easily separate the precipitate. The method for processing lithium ion battery waste includes: a leaching step of leaching battery powder in an acid, the battery powder containing at least aluminum and iron and being obtained from lithium ion battery waste, and removing a leached residue by solid-liquid separation to obtain a leached solution containing at least aluminum ions and iron ions; and a neutralization step of adding phosphoric acid and/or a phosphate salt and an oxidizing agent to the leached solution, increasing a pH of the leached solution to a range of 2.0 to 3.5, precipitating the aluminum ions and the iron ions in the leached solution as aluminum phosphate and iron phosphate, respectively, and removing a neutralized residue by solid-liquid separation to obtain a neutralized solution.

## Description

### [Technical Field]

This specification discloses a technique relating to a method for processing lithium ion battery waste.

### [Background Art]

In recent years, it has been widely studied for recovery of valuable metals such as cobalt and nickel from lithium ion battery waste discarded for expired product life, manufacturing defects or other reasons by means of a wet process, in terms of effective utilization of resources.

In order to recover valuable metals from lithium ion battery waste, for example, battery powder obtained through a roasting step and other steps is leached in an acid to obtain a leached solution in which lithium, nickel, cobalt, manganese, iron, copper, aluminum and the like in the battery powder are dissolved.

Subsequently, as described in Patent Literatures 1 to 3 and the like, iron, copper, aluminum and the like, among various elements dissolved in the leached solution, are sequentially or simultaneously removed by solvent extraction, neutralization and the like, and valuable metals such as nickel and cobalt are separated and concentrated by solvent extraction. This results in a solution in which each metal is dissolved. Nickel and cobalt are recovered from each solution by electrolysis or the like.

In this regard, Patent Literatures 4 to 8 describe techniques for removing aluminum and iron dissolved in the leached solution by neutralization and oxidation. More specifically, Patent Literatures 4 and 5 includes "a leaching step of leaching lithium ion battery scrap and subjecting the resulting leached solution to solid-liquid separation to obtain a first separated solution; an iron removal step of adding an oxidizing agent to the first separated solution to adjust a pH of the first separated solution to a range of 3.0 to 4.0, and then performing solid-liquid separation, and removing iron in the first separated solution to obtain a second separated solution; and an aluminum removal step of neutralizing the second separated solution in a pH range of 4.0 to 6.0, and then performing solid-liquid separation, and removing aluminum to obtain a third separated solution". Further, Patent Literatures 6 and 7 include "a leaching step of leaching lithium ion battery scrap to obtain a leached solution; an aluminum removal step of neutralizing the leached solution in a pH range of 4.0 to 6.0, and then performing solid-liquid separation and removing aluminum from the leached solution to obtain a first separated solution; and an iron removal step of adding an oxidizing agent to the first separated solution to adjust a pH to a range of 3.0 to 5.0, and then performing solid-liquid separation and removing iron in the first separated solution to obtain a second separated solution".

When removing aluminum by such neutralization, an increase in the pH to a relatively high value can lead to an effective reduction of the concentration of aluminum ions in the solution, but it may also result in some separation and precipitation of nickel and cobalt. In this case, losses of nickel and cobalt are concerned.

Here, Patent Literature 8 proposes "a method for recovering a high-purity cobalt compound from a lithium ion battery waste material, comprising: (A) leaching a lithium ion battery waste material containing a cobalt component in an inorganic acid; (B) adjusting a molar ratio of phosphorus and aluminum ions in the leached aqueous solution to 0.6 to 1.2, and oxidizing iron ions at an oxidation potential of 500 mV or more; (C) adjusting the pH of the aqueous solution to 3.0 to 4.5 and removing impurity metals by precipitation to obtain a purified solution; (D) adding oxalic acid to the purified solution to obtain cobalt oxalate, or adjusting the pH of the purified solution to 6 to 10 to obtain cobalt hydroxide or cobalt carbonate as a precipitate". Here, for the steps "(B)" and "(C)", it specifically discloses:
"In the step (B), the molar ratio of phosphorus and aluminum ions in the leached aqueous solution containing cobalt is adjusted to the range of 0.6 to 1.2 by adding phosphoric acid or the like, and an oxidizing agent such as hydrogen peroxide solution is then added to the solution to have an oxidation potential of 500 mV or more, thereby converting divalent iron ions to trivalent ones. If the molar ratio of phosphorus and aluminum ions is less than 0.6, the removal of aluminum during the pH adjustment in the next step (C) will be incomplete. Inversely, if it is more than 1.2, any further significant effect cannot be obtained. Further, if the oxidation potential is less than 500 mV, the oxidation of iron will be incomplete.", and "Furthermore, in the step (C), an alkaline agent such as an aqueous caustic soda solution is added to adjust the pH to 3.0 to 4.5, so that iron hydroxide and aluminum phosphate are precipitated, and the resulting precipitate is removed by filtration or the like to obtain a purified solution."

### [Citation List]

### [Patent Literature]

[PTL 1]
   Japanese Patent Application Publication No. 2010-180439 A
[PTL 2]
   U.S. Patent Application Publication No. 2011/0135547 A1
[PTL3]
   Japanese Patent Application Publication No. 2014-162982 A
[PTL 4]
   WO 2017/159745 A1
[PTL 5]
   U.S. Patent Application Publication No. 2019/0106768 A1
[PTL 6]
   WO 2017/159743 A1
[PTL 7]
   U.S. Patent Application Publication No. 2019/0084839 A1
[PTL 8]
   Japanese Patent Application Publication No. H11-006020 A

### [Summary of Invention]

### [Technical Problem]

If phosphoric acid or the like is added as described in Patent Literature 8, aluminum ions in the solution are precipitated as aluminum phosphate even if the pH is not so high, so that this can be precipitated and removed. Also, by maintaining the pH at a relatively low value during this neutralization, losses of valuable metals such as cobalt and nickel can be suppressed.

On the other hand, Patent Literature 8 precipitates iron as iron hydroxide. The iron hydroxide often forms a gel-like precipitate which is not easily separated from the solution by filtration or the like. This leads to a decrease in a processing efficiency of lithium ion battery waste.

This specification discloses a method for processing lithium ion battery waste, which can effectively precipitate aluminum ions and iron ions in the solution by neutralization and relatively easily separate the precipitate.

### [Solution to Problem]

A method for processing lithium ion battery waste disclosed in this specification comprises: a leaching step of leaching battery powder in an acid, the battery powder containing at least aluminum and iron and being obtained from lithium ion battery waste, and removing a leached residue by solid-liquid separation to obtain a leached solution containing at least aluminum ions and iron ions; and a neutralization step of adding phosphoric acid and/or a phosphate salt and an oxidizing agent to the leached solution, increasing a pH of the leached solution to a range of 2.0 to 3.5, precipitating the aluminum ions and the iron ions in the leached solution as aluminum phosphate and iron phosphate, respectively, and removing a neutralized residue by solid-liquid separation to obtain a neutralized solution.

### [Advantageous Effects of Invention]

According to the method for processing lithium ion battery waste as described above, the aluminum ions and iron ions in the solution can be effectively precipitated by neutralization, and the precipitates can be relatively easily separated.

### [Brief Description of Drawings]

[Fig. 1]

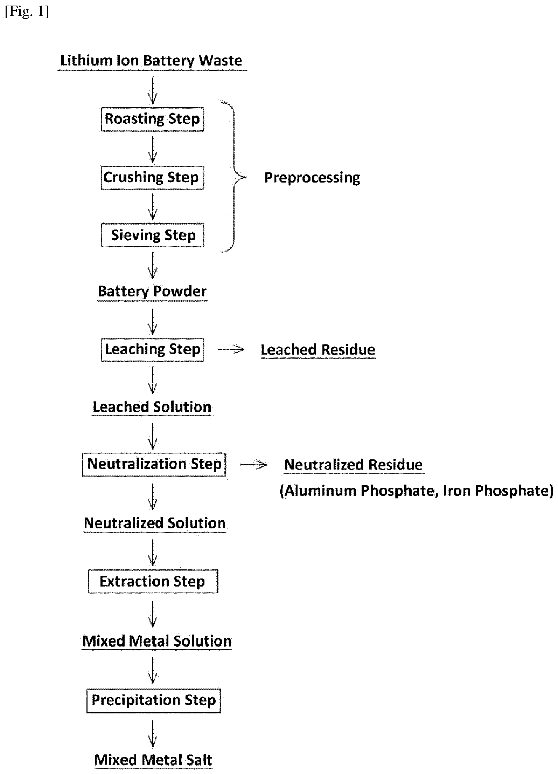

   Fig. 1 is a flowchart illustrating a method for processing lithium ion battery waste according to one embodiment.
[Fig. 2]

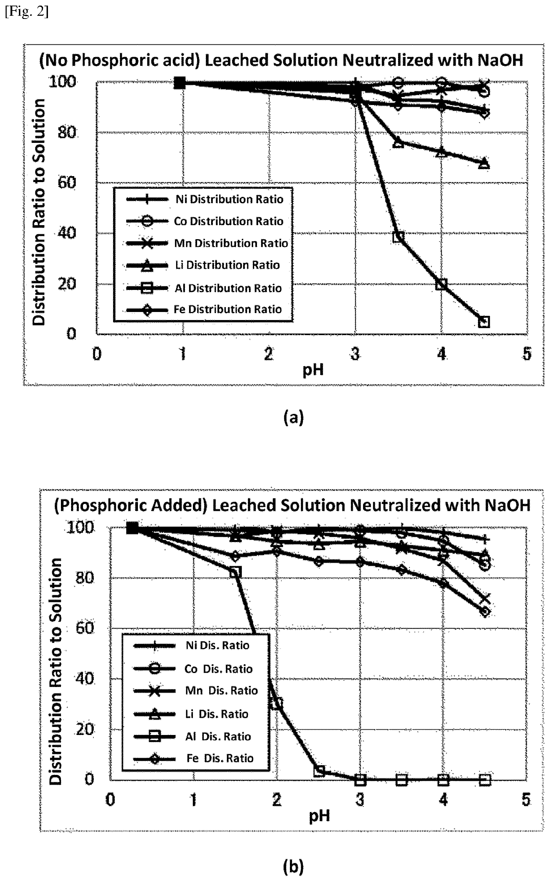

   Fig. 2 is a graph showing changes of distribution ratios of various metals to a solution with respect to a pH change according to Test Example 1 of Examples.
[Fig. 3]

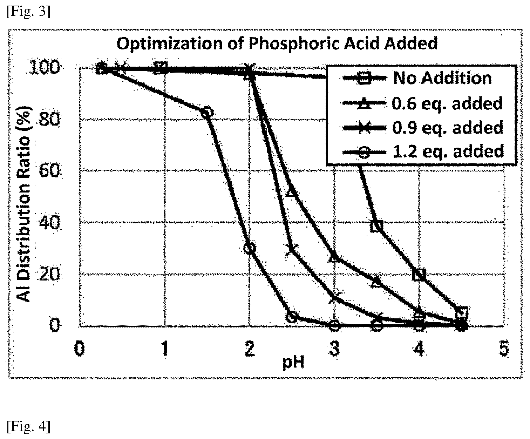

   Fig. 3 is a graph showing changes of distribution ratios of various metals to a solution with respect to a pH change according to Test Example 2 of Examples.
[FIG. 4]

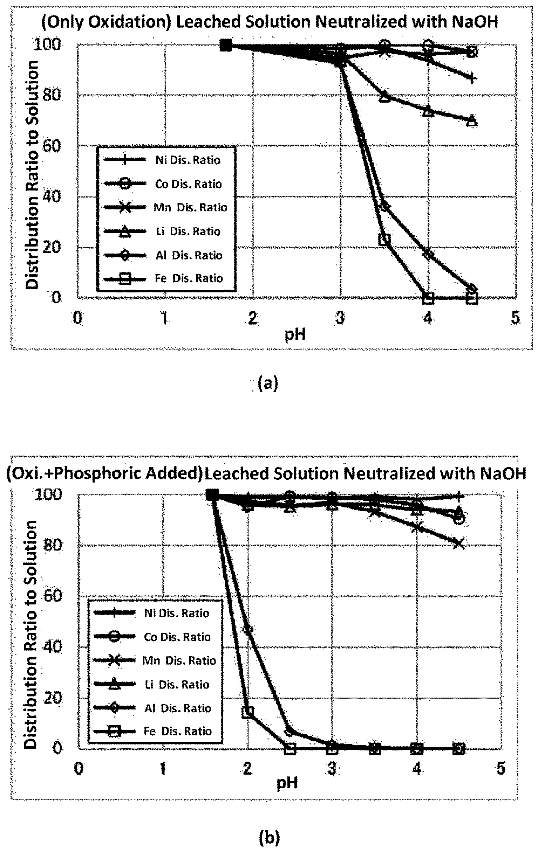

   Fig. 4 is a graph showing changes of distribution ratios of various metals to a solution with respect to a pH change according to Test Example 3 of Examples.

### [Description of Embodiments]

Embodiments of the method for processing lithium ion battery waste mentioned above will be described below in detail.

The method for processing lithium ion battery waste according to one embodiment, as shown in Fig. 1, subjects battery powder obtained by preprocessing lithium ion battery waste or the like to a leaching step and a neutralization step. The battery powder contains at least aluminum and iron, and in the leaching step, the battery powder is leached in an acid, and the resulting leached residue is removed by solid-liquid separation to obtain a leached solution containing at least aluminum ions and iron ions.

Subsequently, in the neutralization step, phosphoric acid and/or a phosphate salt and an oxidizing agent are added to the leached solution, increasing the pH of the leached solution to a range of 2.0 to 3.0, thereby precipitating aluminum ions and iron ions as aluminum phosphate and iron phosphate, respectively. Here, most of the aluminum ions and iron ions are precipitated as phosphate salts rather than hydroxides and the like, and are contained in the neutralized residue. Thus, the neutralized residue can be easily separated and removed from the solution by solid-liquid separation such as filtration. After solid-liquid separation in the neutralization step, the neutralized residue is removed to obtain a neutralized solution.

In this embodiment, as shown in Fig. 1, the neutralized solution is subjected to an extraction step and a precipitation step in this order to obtain the mixed metal salt, although not limited thereto.

### (Lithium Ion Battery Waste)

The lithium ion battery waste of interest is lithium ion secondary batteries which can be used in various electronic devices such as mobile phones and which have been discarded due to the expired life of the product, manufacturing defects or other reasons. The recovery of valuable metals from such lithium ion battery waste is preferred in terms of effective utilization of resources. Further, an object herein is to recover valuable metals cobalt and/or nickel with high purity so that they can be reused for manufacturing lithium ion secondary batteries.

The lithium ion battery waste has a housing containing aluminum as an exterior that wraps around the lithium ion secondary battery. Examples of the housing include those made only of aluminum and those containing aluminum, iron, aluminum laminate, and the like. The lithium ion battery waste may also contain, in the above housing, cathode active materials composed of one single metal oxide or two or more composite metal oxides or the like, selected from the group consisting of lithium, nickel, cobalt and manganese, and aluminum foils (cathode substrates) to which the cathode active materials are applied and fixed by, for example, polyvinylidene fluoride (PVDF) or other organic binder. In addition, the lithium ion battery waste may contain copper, iron, or the like. Further, the lithium ion battery waste generally contains an electrolytic solution in the housing. For example, ethylene carbonate, diethyl carbonate or the like may be used as the electrolytic solution.

### (Preprocessing)

In many cases, preprocessing is performed for lithium ion battery waste. The preprocessing may include roasting, crushing and sieving steps. The lithium ion battery waste becomes battery powder through the preprocessing.

In the roasting step, the above lithium ion battery waste is heated. The roasting step is carried out for the purposes of changing a metal such as lithium and cobalt contained in the lithium ion battery waste to a form of the metal which can be easily dissolved, and the like, for example. In the roasting step, the lithium ion battery waste is preferably heated by maintaining it in a temperature range of from 450 °C to 1000 °C, preferably in a temperature range of from 600°C to 800 °C, for 0.5 to 4 hours, for example. The roasting step can be carried out by using various heating equipment such as a rotary kiln furnace or other various furnaces, and a furnace for heating in an air atmosphere.

After the roasting step, a crushing step is carried out to remove cathode materials and the like from the housing. The crushing step selectively separates the cathode active materials from the aluminum foils to which the cathode active materials are applied, while destroying the housing of the lithium ion battery waste.

Various known apparatuses or devices can be used in the crushing step. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an exit of the crusher, whereby the lithium ion battery waste is discharged from the crusher through the screen when crushed to a size that can pass through the screen.

After crushing the lithium ion battery waste in the crushing step, a sieving step is performed by sieving it using a sieve having an appropriate opening, for example, for the purpose of removing aluminum powder. Thus, aluminum or copper remains on the sieve, and battery powder from which Al or Cu has been removed to some extent can be obtained under the sieve.

The battery powder obtained through the preprocessing contains at least aluminum and iron. The battery powder has an aluminum content of, for example, 1% by mass to 10% by mass, typically 3% by mass to 5% by mass, and an iron content of, for example, 1% by mass to 5% by mass, typically 1% by mass to 3% by mass.

The battery powder may further contain manganese and cobalt and/or nickel. For example, the battery powder has a cobalt content of 0% by mass to 30% by mass, a nickel content of 0% by mass to 30% by mass, and a manganese content of 0% by mass to 30% by mass. Also, the battery powder may contain 2% by mass to 8% by mass of lithium. In addition, the battery powder may contain copper and the like.

### (Leaching Step)

In the leaching step, the above battery powder is added to an acidic leaching solution such as sulfuric acid and leached by the acid. Subsequently, solid-liquid separation using a filter press, a thickener, or the like is performed to separate a leached residue and a leached solution, and the leached residue is removed.

If necessary, prior to leaching by the acidic leaching solution, the battery powder may be brought into contact with water in advance so that only lithium contained in the lithium ion battery waste is leached and separated. In this case, the acid leaching is performed by adding to the above acidic leaching solution the water leached residue obtained after the battery powder is brought into contact with water to leach lithium.

The acid leaching in the leaching step can be carried out by a known method or under known conditions, but it may preferably be carried out at a pH of 0.0 to 3.0. At the end of the acid leaching, the pH of the leached solution may be from 0.5 and 2.0. An oxidation-reduction potential (ORP value, based on silver/silver chloride potential) is, for example, -250 mV to 0 mV immediately after the acid leaching, and it may be about 300 mV in the leached solution after solid-liquid separation.

The leached solution obtained here contains at least aluminum ions and iron ions. The leached solution may also contain manganese ions and one or more metal ions selected from cobalt ions and nickel ions. It should be noted that copper which may be contained in the battery powder can be removed by leaving it in the leached residue without being dissolved by the acid leaching. If copper is also leached and dissolved in the leached solution, a step of removing copper by electrolysis may be performed before the neutralization step as described later.

The leached solution has, for example, a cobalt ion concentration of 10 g/L to 30 g/L, a nickel ion concentration of 10 g/L to 30 g/L, a manganese ion concentration of 10 g/L to 30 g/L, and an aluminum ion concentration of 1.0 g/L to 5.0 g/L, and an iron ion concentration of 1.0 g/L to 5.0 g/L.

### (Neutralization Step)

In the neutralization step, at least a part of the aluminum ions and at least a part of the iron ions are precipitated from the leached solution, and the neutralized residue containing the precipitate is removed by solid-liquid separation. Thus, a neutralized solution is obtained.

Here, more specifically, phosphoric acid and/or a phosphate salt and an oxidizing agent are added to the leached solution and the pH of the leached solution is increased to the range of 2.0 to 3.5. As a result, the aluminum ions and iron ions contained in the leached solution are precipitated as aluminum phosphate and iron phosphate, respectively, and are contained in the precipitate.

Such phosphate salts are easier to separate by filtration or the like during solid-liquid separation than hydroxides, so that a decrease in a processing efficiency due to difficulty in separation is effectively suppressed. In this embodiment, since the neutralized residue contains phosphate salts such as aluminum phosphate and iron phosphate, the neutralized residue can be easily separated from the solution by solid-liquid separation such as filtration. In other words, if a large amount of hydroxide such as iron hydroxide is contained in the precipitate produced by neutralization, the hydroxide in a form of gel or the like is difficult to be separated from the solution, which will reduce a processing efficiency of the lithium ion battery waste.

Further, here, the phosphoric acid and/or phosphate salt is added to the leached solution to precipitate the aluminum ions and iron ions as aluminum phosphate and iron phosphate, respectively, so that it is not necessary to increase the pH so much at that time. If the pH is increased to a relatively low value in the range of 2.0 to 3.5, aluminum phosphate and iron phosphate can be effectively precipitated to remove aluminum and iron, so that losses of cobalt, nickel and the like can be suppressed at the present stage.

That is, when the pH is increased to a value higher than 3.5, even cobalt ions and nickel ions in the leached solution are precipitated, resulting in losses of these valuable metals. On the other hand, when the pH is too low, there is concern that precipitation of aluminum phosphate and iron phosphate will be insufficient. From this point of view, the pH during the neutralization is preferably 2.5 to 3.5.

Further, when manganese ions derived from battery powder are contained in the leached solution, the manganese ions may also be precipitated as manganese phosphate if the pH during the neutralization is too high. As will be described later, if a mixed metal solution or a mixed metal salt is to be produced, precipitation and removal of many manganese ions in the neutralization step may lead to a significant change of a composition ratio of cobalt and/or nickel to manganese, which is not preferable. In this embodiment, the pH in the range as described above can allow aluminum and iron to be removed while suppressing the precipitation of the manganese ions.

In the neutralization step, the phosphoric acid and/or phosphate salt is/are added to the leached solution. The phosphoric acid as used herein means, for example, a compound having a phosphoric acid skeleton (so-called phosphoric acids) resulting from hydration of diphosphorus pentoxide (P₂O₅), including orthophosphoric acid (H₃PO₄) and diphosphoric acid (H₄P₂O₇) and the like. Also, the phosphate salt is a compound containing a polyatomic ion(s) or a group(s) composed of phosphorus and oxygen, and specific examples include trisodium phosphate (Na₃PO₄), disodium hydrogen phosphate (Na₂HPO₄), sodium hydrogen (NaH₂PO₄), hydrates thereof, and the like. When such phosphoric acid and/or phosphate salt is/are added to the leached solution and the pH is increased as described above, for example, a reaction such as Al₂(SO₄)₃ + 2H₃PO₄ + 6NaOH → 2AlPO₄ + 3Na₂SO₄ + 6H₂O takes place for aluminum, resulting in production of aluminum phosphate (AlPO₄) and iron phosphates (Fe₃(PO₄)₂, FePO₄).

An amount of the phosphoric acid and/or phosphate salt added to the leached solution is preferably such that phosphorus in the phosphoric acid and/or phosphate salt is 0.6-fold molar equivalent to 1.2-fold molar equivalent based on the total amount of aluminum ions and iron ions in the leached solution. By setting the added amount of the phosphoric acid and/or phosphate salt to the amount containing 0.6-fold molar equivalent or more of phosphorus based on the total amount of aluminum ions and iron ions, the aluminum ions and iron ions in the leached solution are sufficiently precipitated as aluminum phosphate and iron phosphate, allowing them to be removed more effectively. The amount of the phosphoric acid and/or phosphate salt added is preferably such that phosphorous in the phosphoric acid and/or phosphate salt is less than or equal to 1.2-fold molar equivalent based on the total amount of aluminum ions and iron ions, in order to suppress an increase in cost due to excessive addition. The added amount is preferably 0.6 to 1.2-fold molar equivalent.

The leached solution may contain a small amount of phosphorus derived from the electrolytic solution of the lithium ion battery waste and the like, but such phosphorus may also be consumed in the neutralization step.

The oxidizing agent is also added to the leached solution. By adding the oxidizing agent, the iron in the solution is oxidized from bivalent iron to trivalent iron, and is easily precipitated as iron phosphate. The oxidizing agent is not particularly limited as long as it can oxidize iron. For example, hydrogen peroxide and manganese dioxide can be used. Manganese dioxide used as the oxidizing agent may be a reagent, a cathode active material containing manganese dioxide, or a manganese-containing leached residue obtained by leaching the cathode active material. Alternatively, the oxidizing agent may be air or oxygen fed by bubbling.

In order to precipitate iron, the oxidation-reduction potential (ORP value, based on silver/silver chloride potential) during oxidation is preferably 300 mV to 900 mV, for example, about 600 mV. Prior to addition of the oxidizing agent, an acid such as sulfuric acid, hydrochloric acid, and nitric acid can be added to decrease the pH.

After the addition of the phosphoric acid and/or phosphate salt and oxidizing agent, an alkali can be added to adjust the pH to the above range. The alkali is not particularly limited, but in the case of the leached solution containing sulfuric acid, a sodium-based alkali, sodium hydroxide, is preferred rather than a calcium-based alkali.

The neutralized solution often contains manganese ions, and may further contain one or more metal ions selected from cobalt ions and nickel ions. In addition, the neutralized solution may contain aluminum ions and lithium ions that have remained without being removed by neutralization.

For example, the neutralized solution may have a cobalt ion concentration of 0 g/L to 20 g/L, a nickel ion concentration of 0 g/L to 20 g/L, and a manganese ion concentration of 1 g/L to 20 g/L. The neutralized solution may have an aluminum ion concentration of 0.1 g/L to 2 g/L. Also, it may have a lithium ion concentration of, for example, 2.0 g/L to 5.0 g/L.

### (Extraction Step)

After the neutralization step, an extraction step using a solvent extraction method can be performed. If aluminum ions remain in the neutralized solution, the aluminum ions are first extracted and removed, and the metal ions of one or more of cobalt ions and nickel ions and manganese ions are then extracted and back-extracted together. However, if the neutralized solution contains substantially no aluminum ions, the solvent extraction for removing aluminum can be omitted.

In order to remove the aluminum ions, the aluminum ions are extracted into a solvent (organic phase) while leaving manganese ions and the like in the neutralized solution in the aqueous phase. As a result, aluminum ions are removed from the extracted residue, and at least cobalt ions and/or nickel ions and manganese ions are contained in the extracted residue. Here, the manganese ion concentration after extraction of the aluminum ions is preferably 80% or more, and more preferably 90% or more, of the manganese ion concentration before removal of the aluminum ions.

Here, if the manganese ions are not extracted so much and aluminum ions are extracted, various extracting agents such as phosphate-based extracting agents and carboxylic acid-based extracting agents can be used, and it requires an appropriate equilibrium pH accordingly. In particular, examples of the carboxylic acid-based extracting agents include neodecanoic acid and naphthenic acid. Among them, neodecanoic acid is preferable from the viewpoint of extracting the aluminum ions while extracting the manganese ions as little as possible. The carboxylic acid-based extracting agent preferably contains a carboxylic acid having 8 to 16 carbon atoms. Specifically, Versatic Acid 10 (also referred to as "VA-10") manufactured by Shell Chemicals and the like can be used. In this case, the equilibrium pH during the extraction is preferably 4.0 to 5.0, and more preferably 4.3 to 4.7. If the equilibrium pH is too low, the aluminum ions may not be sufficiently extracted into the solvent, and large amounts of the aluminum ions may remain in the neutralized solution. On the other hand, if the equilibrium pH is too high, the aluminum ions are hydroxylated to form solid aluminum hydroxide, which cannot be extracted by solvents. The use of the solvent containing the carboxylic acid-based extracting agent to achieve such an equilibrium pH can remove substantially all the aluminum ions while leaving most of the manganese ions in the aqueous phase.

When the extracting agent is used, it is typically diluted with a hydrocarbon-based organic solvent to form a solvent. Examples of the organic solvents include aromatic, paraffinic, and naphthenic solvents. For example, the concentration of the phosphate extracting agent in the solvent may be 20% to 30% by volume, and the concentration of the carboxylic acid extracting agent in the solvent may be 20% to 30% by volume, although not limited thereto. It should be noted that an O/A ratio may be 1.0 to 5.0.

The above extraction can be performed based on common techniques. As an example, a solution (aqueous phase) and a solvent (organic phase) are brought into contact with each other and stirred and mixed, typically by a mixer, for 5 to 60 minutes to allow the ions to react with the extracting agent. The temperature during extraction is from ordinary temperature (about 15 to 25° C) to 60°C or less, and is preferably 35 to 45°C for reasons of an extraction rate, phase separation, and evaporation of the organic solvent. Subsequently, the mixed organic phase and aqueous phase are separated by a settler based on a difference in specific gravity. The extraction of cobalt ions and/or nickel ions and manganese ions, which will be described later, can also be carried out in substantially the same manner.

After extraction of the aluminum ions, for example, the cobalt ion concentration may be 0 g/L to 20 g/L, the nickel ion concentration may be 0 g/L to 20 g/L, the manganese ion concentration may be 1 g/L to 20 g/L, and the aluminum ion concentration may be 0.001 g/L or less.

The extraction of one or more metal ions selected from cobalt ions and nickel ions and manganese ions is carried out under conditions where two or three of these ions are extracted together and back-extracted. As a result, impurities such as sodium ions, calcium ions, lithium ions, and magnesium ions that may be contained in the neutralized solution are left in the aqueous phase and separated from the above metal ions and manganese ions to obtain a mixed metal solution as an extracted solution containing the above metal ions and manganese ions.

In the extraction, it is preferable to use the solvent containing the carboxylic acid-based extracting agent and have an equilibrium pH of 6.5 to 7.5. If the equilibrium pH is in this range, the cobalt ions and/or nickel ions and manganese ions can be effectively extracted while leaving impurities in the aqueous phase. More preferably, the equilibrium pH is 6.8 to 7.2.

As described above, the carboxylic acid-based extracting agent may be naphthenic acid or the like, but preferably it contains neodecanoic acid, preferably contains a carboxylic acid having 8 to 16 carbon atoms, and it is particularly preferably VA-10. When the carboxylic acid-based extracting containing neodecanoic acid is used, the cobalt ions and/or nickel ions and manganese ions can be effectively extracted without extracting other metal ions. The carboxylic acid-based extracting agent can be used as a solvent by diluting it with an organic solvent such as aromatic, paraffinic, and naphthenic solvents. The concentration of the carboxylic acid-based extracting agent in the solvent is preferably 20% to 30% by volume. This allows manganese ions and cobalt ions and/or nickel ions to be sufficiently extracted while leaving most of the impurities in the aqueous phase. The O/A ratio is preferably 1.0 to 1.5. The O/A ratio in this range can allow manganese ions and cobalt ions and/or nickel ions to be sufficiently extracted with substantially no extraction of the impurities.

The neutralized solution may contain phosphorus due to the addition of the phosphoric acid and/or phosphate salt in the neutralization step, but the phosphorus remains in the aqueous phase upon extraction of one or more of cobalt ions and nickel ions as well as manganese ions with the solvent, and can be separated from one or more of these metal ions and manganese ions.

After the cobalt and/or nickel and manganese ions have been extracted in the solvent, the solvent is back-extracted to transfer the cobalt and/or nickel and manganese ions to the aqueous phase. Specifically, the solvent is mixed with a back-extracting solution such as sulfuric acid or hydrochloric acid, and stirred with a mixer or the like for 5 to 60 minutes, for example. Sulfuric acid is preferably used as the back-extracting solution. When a sulfuric acid back-extracting solution is used, the mixed metal solution, which is a back-extracted solution, becomes a sulfuric acid solution. The acid concentration of the back-extracting solution is 0.05 g/L to 200 g/L (pH: - 0.6 to 3.0), more preferably 1.5 g/L to 15 g/L (pH: 0.5 to 1.5), in order to effectively back-extract the manganese ions and cobalt ions and/or nickel ions in the solvent. The temperature during the back extraction can be from ordinary temperature to 60°C or less, and preferably 35 to 45°C, for the reasons of a back extraction rate, phase separation, and evaporation of the organic solvent.

The mixed metal solution contains cobalt ions and/or nickel ions and manganese ions. For example, the metal mixed solution may have a cobalt ion concentration of 0 g/L to 50 g/L, a nickel ion concentration of 0 g/L to 50 g/L, and a manganese ion concentration of 1 g/L to 50 g/L. The mixed metal solution may contain sodium, calcium, and magnesium as impurities, and the total concentration of the impurities is preferably 1.0 g/L or less.

In the precipitation step, a mixed metal salt containing each metal salt of cobalt and/or nickel and manganese is precipitated from the mixed metal solution (back-extracted solution) obtained in the extraction step.

Here, for example, an alkali such as sodium hydroxide is added to the mixed metal solution to adjust the pH to 9.0 to 10.0, thereby precipitating cobalt and/or nickel and manganese. The oxidation-reduction potential (ORP value, based on silver/silver chloride potential) at this time can be, for example, 0 mV to 600 mV. The solution temperature can be 60°C to 90°C.

The mixed metal salt obtained by the subsequent solid-liquid separation may contain each metal salt of cobalt and/or nickel and manganese, such as a mixture of cobalt hydroxide and/or nickel hydroxide and manganese hydroxide. Further, the neutralized residue may contain an oxide of each metal, Co₃O₄, Mn₃O₄, Mn₂O₃, Ni₃O₄, and the like.

If necessary, the neutralized residue may be washed with water or the like, and then dissolved in a sulfuric acid solution, heated and concentrated or cooled to obtain a mixed metal salt containing cobalt sulfate and/or nickel sulfate and manganese sulfate.

The mixed metal salt containing hydroxides or sulfates of cobalt and/or nickel and manganese as described above, for example, may have a cobalt content of 0% by mass to 60% by mass, a nickel content of 0% by mass to 60% by mass, and a manganese content of 1% to 60% by mass. The mixed metal salt preferably has a sodium content of 60 ppm by mass or less, a calcium content of 10 ppm by mass or less, and a magnesium content of 10 ppm by mass or less, as impurities.

Such a mixed metal salt can be easily recovered at a lower cost than each metal of cobalt, nickel and manganese, and can be suitably used for the production of lithium ion batteries.

### [Examples]

Next, the method for processing the lithium ion battery waste as described above was experimentally performed and its effects were confirmed as described below. However, the description herein is merely for the purpose of illustration and is not intended to be limited thereto.

### (Test Example 1)

The battery powder obtained by roasting, crushing, and sieving the lithium ion battery waste was leached in a sulfuric acid solution, and the leached residue was separated to obtain a leached solution. Figs. 2(a) and (b) shows distribution ratios of the metals in the solutions in the case where neutralization was performed by adding NaOH without adding phosphoric acid to the leached solution, and in the case where neutralization was performed by adding NaOH after adding phosphoric acid, respectively. The phosphoric acid used herein contained 1.2-fold molar equivalent of phosphorus based on the amount of aluminum ions in the leached solution.

When phosphoric acid was not added, as shown in Fig. 2(a), 90% or more of aluminum could be separated at a pH of 4.5 or more, but 4 to 10% of nickel and cobalt were lost.

On the other hand, when phosphoric acid was added, as shown in Fig. 2(b), aluminum could be precipitated and separated at a pH of 2.0 to 3.5. Especially when the pH was 3.5, 90% or more of aluminum could be separated, and the losses of nickel and cobalt at pH 3.5 was suppressed to 1 to 3%. Moreover, as can be seen from Fig. 2(b), when the pH is more than 3.5, a larger amount of manganese is precipitated. Also, from the viewpoint of suppressing the precipitation of manganese, the pH is preferably 3.5 or less. Therefore, by adjusting the pH to 2.0 to 3.5, it is possible to separate aluminum while suppressing the precipitation of nickel, cobalt and manganese.

### (Test Example 2)

Fig. 3 shows a distribution ratio of aluminum in the solution in the case where the neutralization was performed while changing the amount of phosphoric acid added to the leached solution such that an amount of phosphorus was 0.0-fold, 0.6-fold, 0.9-fold and 1.2-fold molar equivalent based on the amount of aluminum ions and iron ions in the leached solution.

When the pH during the neutralization is 3.5 or less in order to suppress the losses of nickel and cobalt, the amount of phosphoric acid to be added can preferably be more than or equal to 0.6-fold molar equivalent, further 0.9-fold molar equivalent, in order to effectively remove aluminum, as shown in Fig. 3.

### (Test Example 3)

Figs. 4(a) and 4(b) show distribution ratios of metals in the solutions in the case where the neutralization was performed with NaOH after adding hydrogen peroxide as an oxidizing agent to the leached solution without adding phosphoric acid to oxidize iron and in the case where neutralization was performed with NaOH after adding phosphoric acid and the oxidizing agent.

As can be seen from Fig. 4(b), the oxidizing of iron before neutralization can effectively precipitate not only aluminum but also iron in a lower pH region.

## Claims

1. A method for processing lithium ion battery waste, the method comprising:
a leaching step of leaching battery powder in an acid, the battery powder containing at least aluminum and iron and being obtained from lithium ion battery waste, and removing a leached residue by solid-liquid separation to obtain a leached solution containing at least aluminum ions and iron ions; and
a neutralization step of adding phosphoric acid and/or a phosphate salt and an oxidizing agent to the leached solution, increasing a pH of the leached solution to a range of 2.0 to 3.5, precipitating the aluminum ions and the iron ions in the leached solution as aluminum phosphate and iron phosphate, respectively, and removing a neutralized residue by solid-liquid separation to obtain a neutralized solution.

2. The method for processing lithium ion battery waste according to claim 1, wherein, in the neutralization step, an amount of the phosphoric acid and/or the phosphate salt added to the leached solution is such that an amount of phosphorus in the phosphoric acid and/or the phosphate salt is 0.6-fold molar equivalent to 1.2-fold molar equivalent base on the total amount of the aluminum ions and the iron ions in the leached solution.

3. The method for processing lithium ion battery waste according to claim 1 or 2, wherein:
the leached solution further comprises manganese ions derived from the battery powder,
the neutralization step comprises precipitating the aluminum phosphate and the iron phosphate while suppressing precipitation of the manganese ions, at a pH in said range.

4. The method for processing lithium ion battery waste according to claim 3, wherein the leached solution further comprises one or more metal ions of cobalt ions and nickel ions derived from the battery powder, and
wherein the method further comprises a metal extraction step of using a solvent comprising a carboxylic acid-based extracting agent for the neutralized solution, adjusting an equilibrium pH to 6.5 to 7.5 and extracting manganese ions and the one or more metal ions in the neutralized solution into the solvent, and then back-extracting the manganese ions and the one or more metal ions from the solvent to obtain a mixed metal solution.

5. The method for processing lithium ion battery waste according to claim 4, wherein, in the metal extraction step, during the extraction, phosphorus contained in neutralized solution is left in the neutralized solution and separated from the manganese ions and the one or more metal ions extracted into the solvent.

6. The method for processing lithium ion battery waste according to claim 4 or 5, wherein, in the metal extraction step, the carboxylic acid-based extracting agent contained in the solvent comprises neodecanoic acid.

7. The method for processing lithium ion battery waste according to any one of claims 4 to 6, further comprising a precipitation step of precipitating a mixed metal salt comprising a metal salt of manganese and a metal salt of at least one of cobalt and nickel from the mixed metal solution.

8. The method for processing lithium ion battery waste according to claim 7, wherein the precipitation step comprises neutralizing the mixed metal solution with sodium hydroxide, and precipitating a mixed metal comprising a hydroxide of manganese and a hydroxide of at least one of cobalt and nickel.

9. The method for processing lithium ion battery waste according to claim 7 or 8, wherein the mixed metal salt is used for production of lithium ion batteries.
